# EUROPEAN PATENT APPLICATION

(11) **EP 4 807 763 A1**
(43) Date of publication of application: **16.09.2026**
(21) Application number: 24887215.2
(22) Date of filing: 15.01.2024
(51) Int. Cl.: G21B 1/05, G21B 1/17

(54) **NUCLEAR FUSION REACTION DEVICE, SYSTEM AND METHOD**

(30) Priority: 07.11.2023 CN 202311474506
(71) Applicant: Shanghai Startorus Fusion Technology Company Limited, Shanghai 201808 (CN)
(72) Inventor: TAN, Yi, Shanghai 201808 (CN); CHEN, Rui, Shanghai 201808 (CN)
(74) Representative: M. Zardi & Co S.A.
(86) International application number: PCT/CN2024/072380
(87) International publication number: WO 2025/097586

(57) **Abstract**

A nuclear fusion reaction device, system and method. The outer wall of a vacuum chamber (301) in the nuclear fusion reaction device (30) comprises an inner ring surface (M1) and an outer ring surface (M2) which are connected to each other; the outer ring surface (M2) surrounds the inner ring surface (M1); the inner ring surface (M1) protrudes toward the central axis of the vacuum chamber (301); the vacuum chamber (301) surrounds a plurality of first coils (302); at least some of the plurality of first coils (302) extend in the circumferential direction of the inner ring surface (M1) and are sequentially arranged in the axial direction of the vacuum chamber (301); a plurality of second coils (303) surround the vacuum chamber (301), extend in the circumferential direction of the outer ring surface (M2), and are sequentially arranged in the axial direction of the vacuum chamber (301); a plurality of third coils (304) all surround the vacuum chamber (301) and are sequentially arranged in the circumferential direction of the vacuum chamber (301); and the plurality of first coils (302), the plurality of second coils (303), and the plurality of third coils (304) are used for generating a magnetic field, such that plasma rings with negative triangular deformation are generated in the vacuum chamber (301), and a fusion reaction occurs.

## Description

This application claims priority to Chinese Patent Application No.202311474506.1, titled "NUCLEAR FUSION REACTION DEVICE, SYSTEM AND METHOD", filed on November 07, 2023, with the China National Intellectual Property Administration (CNIPA), which is incorporated herein by reference in its entirety.

### FIELD

The present disclosure relates to the technical field of nuclear fusion reaction, and in particular to an apparatus, a system, and a method for nuclear fusion reaction.

### BACKGROUND

Fusion nuclear technology is widely studied because of its advantage of producing enormous of clean energy from low-cost materials. Requirement for stability of fusion plasma are increasing.

A nuclear fusion reaction apparatus (such as a Tokamak apparatus) may include a toroidal vacuum chamber, which has a D-shaped section. The vacuum chamber may surround a central column, a plurality of solenoids are sequentially arranged on the central column, and a periphery of the vacuum chamber is surrounded by a plurality of poloidal magnetic field coils. Two plasma rings may be generated in the vacuum chamber by transmitting current to the solenoids and the poloidal magnetic field coils. These two plasma rings may be driven to fuse by adjusting current on the solenoids and the poloidal magnetic field coils, so that the plasma is heated to a fusion reaction temperature, and then fusion reaction occurs to release energy.

However, an improvement on stability of fusion plasma in the conventional nuclear fusion reaction apparatus is still necessary.

### SUMMARY

In view of this, the present disclosure provides an apparatus, a system, and a method for nuclear fusion reaction, with which stability of fusion plasma can be improved.

According to an aspect of an embodiment of the present disclosure, a nuclear fusion reaction apparatus is provided. The nuclear fusion reaction apparatus includes a toroidal vacuum chamber, a plurality of first coils, a plurality of second coils and a plurality of third coils; where
an outer wall of the vacuum chamber comprises an inner torus and an outer torus that are connected to each other, the outer torus surrounds the inner torus, and the inner torus protrudes towards a central axis of the vacuum chamber;
the first coils are surrounded by the vacuum chamber, and at least some of the first coils are sequentially arranged in an axial direction of the vacuum chamber and each extend in a circumferential direction of the inner torus;
the second coils surround the vacuum chamber, are sequentially arranged in the axial direction of the vacuum chamber and each extend in a circumferential direction of the outer torus;
the third coils surround the vacuum chamber, and are sequentially arranged in a circumferential direction of the vacuum chamber; and
the first coils, the second coils and the third coils are for generating a magnetic field, to generate a plasma ring with negative triangularity in the vacuum chamber and cause fusion reaction.

According to another aspect of the embodiment of the present disclosure, a nuclear fusion reaction system is provided, including:
the nuclear fusion reaction apparatus as described above;
a magnet power supply, connected with the coils in the nuclear fusion reaction apparatus and configured to transmit a current to the coils;
a plasma diagnosis unit, configured to detect a parameter of a plasma in the vacuum chamber of the nuclear fusion reaction apparatus; and
a control unit, configured to adjust, based on the parameter, the current transmitted to the coils.

According to another aspect of the embodiment of the present disclosure, a method for nuclear fusion reaction is provided. The method is applied to the nuclear fusion reaction system, and includes:
starting a suction pump in the nuclear fusion reaction system to exhaust gas from the vacuum chamber of the nuclear fusion reaction apparatus in the nuclear fusion reaction system;
starting the magnet power supply in the nuclear fusion reaction system, to transmit a current to the third coils in the nuclear fusion reaction apparatus and generate a toroidal magnetic field in the vacuum chamber;
controlling an inlet valve in the nuclear fusion reaction apparatus, to inject a fusion fuel gas into the vacuum chamber;
controlling the magnet power supply to transmit a current to a first coil and a second coil that are located at one end of the vacuum chamber in the axial direction and transmit the current to a first coil and a second coil that are located at the other end of the vacuum chamber in the axial direction in the nuclear fusion reaction apparatus, to produce two magnetic null points respectively at the two ends of the vacuum chamber in the axial direction, and generate two plasma rings respectively at the two magnetic null points;
controlling the magnet power supply to transmit a current to the first coils and the second coils sequentially in an order from the two ends to the middle in the axial direction; and
adjusting, based on a parameter detected by the plasma diagnosis unit in the nuclear fusion reaction system, the current transmitted by the magnet power supply to the first coils and the second coils, to fuse the two plasma rings into the plasma ring with negative triangularity, and heat the plasma in the plasma ring with negative triangularity to a fusion temperature to cause fusion reaction.

In the nuclear fusion reaction apparatus provided in the present disclosure, the inner torus of the outer wall of the vacuum chamber protrudes towards the central axis of the vacuum chamber, the first coils are sequentially arranged in the axial direction of the vacuum chamber and each extend in the circumferential direction of the inner torus. A magnetic field is generated by the first coils and the second coils, so that a plasma ring with negative triangularity is generated in the vacuum chamber and a fusion reaction occurs. In this way, the first coils are close to the plasma ring with negative triangularity, and therefore a force required for negative triangularity may be applied to the plasma ring by merely inputting a low current to the first coils. Hence, a current loss is reduced, and a generation efficiency of the plasma ring with negative triangularity is improved. Since control of a low current is stable, an accuracy and stability of control of the plasma ring with negative triangularity is improved, and thereby a stability of fusion plasma is improved.

### BRIEF DESCRIPTION OF THE DRAWINGS

FIG. 1 is a schematic diagram of a section of a Tokamak apparatus according to a conventional technology;
FIG. 2 is a schematic diagram of a sectional shape of a plasma ring according to a conventional technology;
FIG. 3 is a schematic structural diagram of a nuclear fusion reaction apparatus according to an embodiment of the present disclosure;
FIG. 4 is a schematic structural diagram of a nuclear fusion reaction apparatus according to an embodiment of the present disclosure;
FIG. 5 is a schematic diagram of a state of a nuclear fusion reaction apparatus in a nuclear fusion reaction process according to an embodiment of the present disclosure;
FIG. 6 is a schematic diagram of a state of a nuclear fusion reaction apparatus in a nuclear fusion reaction process according to an embodiment of the present disclosure;
FIG. 7 is a schematic diagram of a state of a nuclear fusion reaction apparatus in a nuclear fusion reaction process according to an embodiment of the present disclosure;
FIG. 8 is a schematic diagram of a state of a nuclear fusion reaction apparatus in a nuclear fusion reaction process according to an embodiment of the present disclosure;
FIG. 9 is a schematic diagram of a state of a nuclear fusion reaction apparatus in a nuclear fusion reaction process according to an embodiment of the present disclosure;
FIG. 10 is a schematic structural diagram of a nuclear fusion reaction apparatus according to an embodiment of the present disclosure;
FIG. 11 is a schematic structural diagram of a nuclear fusion reaction apparatus according to an embodiment of the present disclosure;
FIG. 12 is a schematic structural diagram of a nuclear fusion reaction apparatus according to an embodiment of the present disclosure;
FIG. 13 is a schematic structural diagram of a nuclear fusion reaction apparatus according to an embodiment of the present disclosure; and
FIG. 14 is a flow chart of a method for nuclear fusion reaction according to an embodiment of the present disclosure.

### DETAILED DESCRIPTION OF EMBODIMENTS

Numerous specific details are set forth in the following description to provide a thorough understanding of the present disclosure. However, the present disclosure may be implemented in many other ways than those described herein, and those skilled in the art may make similar promotions without violating the meaning of the present disclosure. Therefore, the present disclosure is not limited to the specific embodiments disclosed below.

Terms used in one or more embodiments of the present disclosure are intended only to describe specific embodiments and are not intended to limit one or more embodiments of the present disclosure. Singular forms with words "a", "the" or "this" used in one or more embodiments of the present disclosure and the appended claims are intended to include plural forms, unless clearly indicated in the context otherwise. It should be further understood that the term "and/or" as used in one or more embodiments of the present disclosure refers to and encompasses any or all possible combinations of one or more related listed items. The term "at least one" in one or more embodiments of the present disclosure means "one or more", and "a plurality of" means "two or more". The term "include/comprise" is non-exclusive and should be understood as "including/comprising but not limited to", and may include additional content in addition to what described.

Although terms "first", "second" and the like may be used to describe information in one or more embodiments of the present disclosure, it should be understood that the information should not be limited to these terms. These terms are used only to distinguish the same type of information from one another. For example, without departing from the scope of one or more embodiments of the present disclosure, the "first" may be referred to as the "second", and similarly, the "second" may be referred to as the "first". Depending on the context, the word "if" as used herein may be interpreted as "when... " or "in a case where... " or "in response to determination of".

Conventionally, nuclear fusion is considered an ideal choice to solve the energy problem for human. A large amount of clean energy can be provided through nuclear fusion reaction, and fuel sources for the nuclear fusion reaction are extensive and cost-effective. Accordingly, nuclear fusion reaction apparatuses are widely studied. For example, a Tokamak apparatus is a type of nuclear fusion reaction apparatus that is extensively studied.

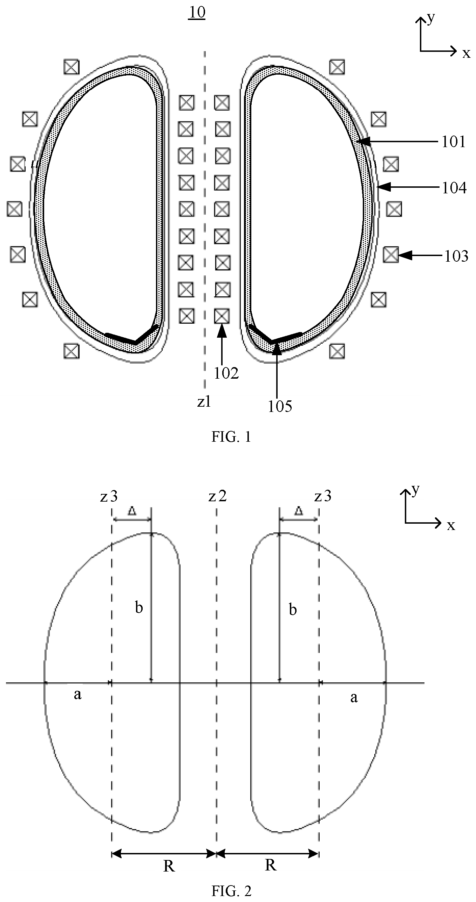

FIG. 1 is a schematic diagram of a section of a Tokamak apparatus according to a conventional technology. As shown in FIG. 1, a Tokamak apparatus 10 includes a toroidal vacuum chamber 101 and a magnet located around the vacuum chamber 101. The section is a plane where a central axis z1 of the vacuum chamber 101 is located. The vacuum chamber 101 has a D-shaped section. The magnet includes a central solenoid 102 located in a region surrounded by the vacuum chamber 101, a poloidal magnetic field coil 103 surrounding the vacuum chamber 101 in a transverse direction, and a toroidal magnetic field coil 104 surrounding the chamber 101 in a longitudinal direction. The transverse direction refers to a direction perpendicular to the central axis z1 (e.g., the x direction in the figure), and the longitudinal direction refers to a direction parallel to the central axis z1 (e.g., the y direction in the figure). A magnetic field may be generated from the magnet to confine a plasma within the vacuum chamber 101. Nuclear fusion reaction is realized through heating.

Reference is further made to Figure 1. The Tokamak apparatus further includes a divertor 104, configured to perform heat removal, ash removal, and other tasks for the vacuum chamber. It should be noted that the divertor 104 shown in the figure is only for illustrating a position of the divertor in relative to the vacuum chamber 101, and does not constitute a limitation on an actual shape and size of the divertor 104.

However, the Tokamak apparatus faces a series of challenges in nuclear fusion reaction. For example, generated plasma is prone to problems of instability, turbulence, and the like, and a thermal load of the divertor is high. The instability and turbulence of the plasma not only lead to loss of plasma energy and reduce an energy confinement time, but also may lead to plasma disruption and thereby cause serious damage to the Tokamak apparatus. A target plate of the conventional divertor can withstand a thermal load limit of 10 megawatts per square meter (MW/m2), which is far from meeting a future requirement for a nuclear fusion reaction apparatus.

The embodiment of the present disclosure provides a nuclear fusion reaction apparatus, with which a stability of fusion plasma can be improved, an energy confinement time can be increased, and a thermal load of a divertor can be reduced. A nuclear fusion reaction system and a method for nuclear fusion reaction are further involved in embodiments of the present disclosure.

The nuclear fusion reaction apparatus provided in the embodiment of the present disclosure is designed based on a plasma ring with negative triangularity. FIG. 2 is a schematic diagram of a sectional shape of a plasma ring according to a conventional technology. The plasma ring may be generated in the vacuum chamber of the Tokamak apparatus as shown in FIG. 1. The negative triangularity of the plasma is introduced below in combination with FIG. 2.

As shown in FIG. 2, a major radius of the plasma ring is R, a minor radius of the plasma ring is a, and an aspect ratio of the plasma ring is A=R/a. The major radius refers to a distance from a central axis z2 of the plasma ring to a reference axis z3, where the reference axis z3 passes through a midpoint of the section of the plasma ring and is parallel to the central axis z2. The minor radius refers to a maximum distance from the reference axis z3 to an outer edge of the plasma ring in a direction perpendicular to the central axis z2 (e.g., the x direction).

A section parameter of the plasma ring may further include an elongation k and a triangularity parameter δ. The elongation may reflect an elongation of the plasma ring in a vertical direction (y direction). The elongation in the vertical direction is beneficial to an increase in a specific pressure. The specific pressure refers to a ratio of a plasma pressure to a magnetic field pressure. The triangularity parameter may reflect triangularity of the plasma ring, and the triangularity is beneficial to the stability of the plasma. Half of a maximum distance of the plasma ring in its axial direction (e.g., the y direction) may be b, and the elongation of the plasma ring is k=b/a. A distance from a highest point or a lowest point of the plasma ring to the reference axis z3 in the direction (e.g., the x direction) perpendicular to the axial direction may be Δ, and the triangularity parameter is δ=Δ/a.

As shown in FIG. 2, the plasma ring has a D-shaped section. The section includes a straight side and an arc side which are connected to each other, and the straight side faces an inner side of the vacuum chamber of the Tokamak apparatus. Such plasma ring generated by the Tokamak apparatus is a plasma ring with positive triangularity. In a case where the section of the plasma ring is in a reversed D-shape and the straight side of the section faces an outer side of the vacuum chamber of the Tokamak apparatus, the plasma ring has the negative triangularity.

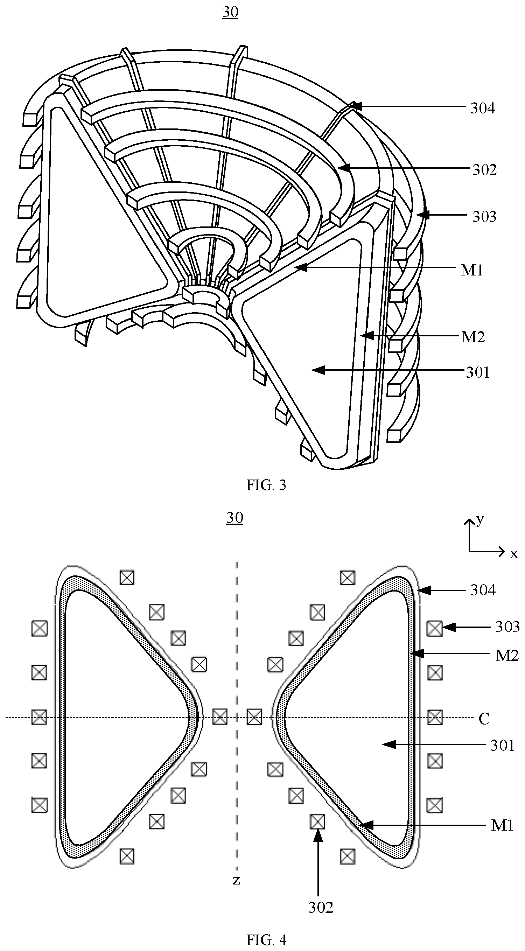

FIG. 3 is a schematic structural diagram of a nuclear fusion reaction apparatus according to an embodiment of the present disclosure. FIG. 4 is another schematic structural diagram of a nuclear fusion reaction apparatus according to an embodiment of the present disclosure. FIG. 3 shows a structure of a part of the nuclear fusion reaction apparatus with the remaining part being cut off by a plane. FIG. 4 is a schematic diagram of a section of the nuclear fusion reaction apparatus shown in FIG. 3. Reference is made to FIG. 3 and FIG. 4. The nuclear fusion reaction apparatus 30 includes: a vacuum chamber 301 and a magnet. The magnet includes a plurality of first coils 302, a plurality of second coils 303 and a plurality of third coils 304. The quantity and positions of the first coil 302, the second coil 303 and the third coil 304 shown in FIG. 3 and FIG. 4 are only exemplary illustrations, and an actual quantity and positions of the coils may be different from what illustrated.

The vacuum chamber 301 is toroidal, for accommodating plasma. The vacuum chamber 301 may be referred to as a plasma chamber. The section may be a plane where a central axis of the vacuum chamber 301 located. An outer wall of the vacuum chamber 301 may include an inner torus M1 and an outer torus M2 that are connected to each other. The outer torus M2 surrounds the inner torus M1, and the inner torus M1 may protrude towards a central axis z of the vacuum chamber 301. The vacuum chamber 301 may be symmetrical with respect to a reference plane C. The reference plane C is perpendicular to the central axis z, and may pass through a point on the inner torus M1 closest to the central axis z. In some embodiments, the vacuum chamber 301 may not be symmetrical with respect to the reference plane C.

The embodiment of the present disclosure is provided with an example in which the outer torus of the vacuum chamber 301 is a plane. Correspondingly, an axial space of the vacuum chamber 301 increases in a direction from the central axis z of the vacuum chamber 301 to an outer edge, and the vacuum chamber 301 is an annular structure which slopes down towards a center. For example, the section of the vacuum chamber 301 may be in a reversed D-shape or a triangle. In the embodiment of the present disclosure, the section is presented as a triangle, which is specifically a rounded isosceles triangle, as an example. It should be noted that the section needs to be approximately in a reversed D-shape or triangular, and does not have to be in a standard reversed D-shape or triangular.

In some embodiments, the outer torus M2 of the vacuum chamber 301 may protrude in a direction away from the central axis z of the vacuum chamber 301. Such implementation is not illustrated in the embodiment of the present disclosure.

The vacuum chamber 301 of the nuclear fusion reaction apparatus 30 surrounds the first coils 302. At least some first coils 302 of the multiple first coils 302 are sequentially arranged in an axial direction (e.g., y direction) of the vacuum chamber 301 and each extend in a circumferential direction of the inner torus M1. The at least some first coils 302 may be evenly arranged in the y direction. FIG. 3 and FIG. 4 show an example in which all the first coils 302 extend in the circumferential direction of the inner torus M1, that is, the first coils are arranged in a row along the inner torus M1.

In some embodiments, the nuclear fusion reaction apparatus 30 may further include an additional first coil 302, in addition to the first coil 302 shown in FIG. 3. The first coil 302 may be referred to as an ohmic coil or center solenoid. In some embodiments, the first coils 302 in the nuclear fusion reaction apparatus 30 may or may not be symmetrical with respect to the reference plane, which is not limited in the embodiment of the present disclosure.

The vacuum chamber 301 is surrounded by the second coils 303 in the nuclear fusion reaction apparatus 30. The second coils 303 are sequentially arranged in the axial direction of the vacuum chamber 301 and each extend in a circumferential direction of the outer torus M2. The second coils 303 may evenly surround the vacuum chamber 301 in a transverse direction. The second coils 303 are poloidal magnetic field coils. In some embodiments, the second coils 303 may or may not be symmetrical with respect to the reference plane, which is not limited in the embodiment of the present disclosure.

The vacuum chamber 301 is surrounded by the third coils 304 in the nuclear fusion reaction apparatus 30. The third coils are sequentially arranged in a circumferential direction of the vacuum chamber 301. An annular surface of each third coil 304 is parallel to the central axis z of the vacuum chamber 301. The third coils 304 are toroidal magnetic field coils. The third coils 304 may evenly surround the vacuum chamber 301 in a longitudinal direction. The third coils 304 are configured to generate a toroidal magnetic field in the vacuum chamber 301. A direction of triangularity of a third coil 304 is a negative direction, which is from the central axis z of the vacuum chamber 301 to an edge. In an embodiment, a shape of the third coil 304 may fit to a shape of the vacuum chamber 301, and the third coil 304 may be in a reversed D-shape or triangle.

The magnet (including the first coils 302, the second coils 303, and the third coils 304) in the nuclear fusion reaction apparatus 30 is configured to generate a magnetic field to generate plasma in the vacuum chamber 301, confine the plasma to form a plasma ring, and may further control a shape and position of the plasma ring. By adjusting a current on the magnet, a force may be applied to the plasma in the vacuum chamber 301 to drive the plasma to present an expected shape and move to a set position, and thereby a plasma ring with negative triangularity is generated and fusion reaction occurs. In some embodiments, the magnet may be made of a superconducting coil that achieves a zero resistance at a low temperature, so that the stability and efficiency of the magnetic field is improved.

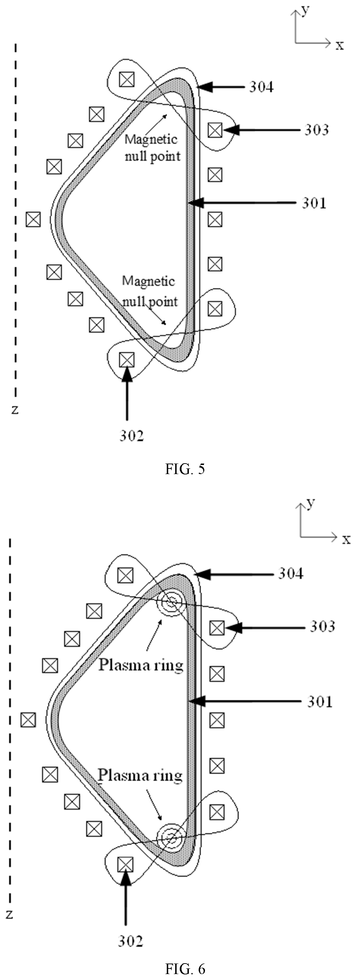

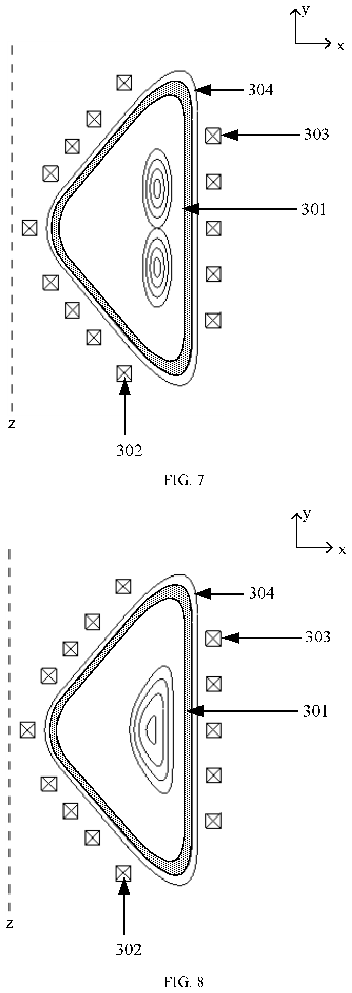

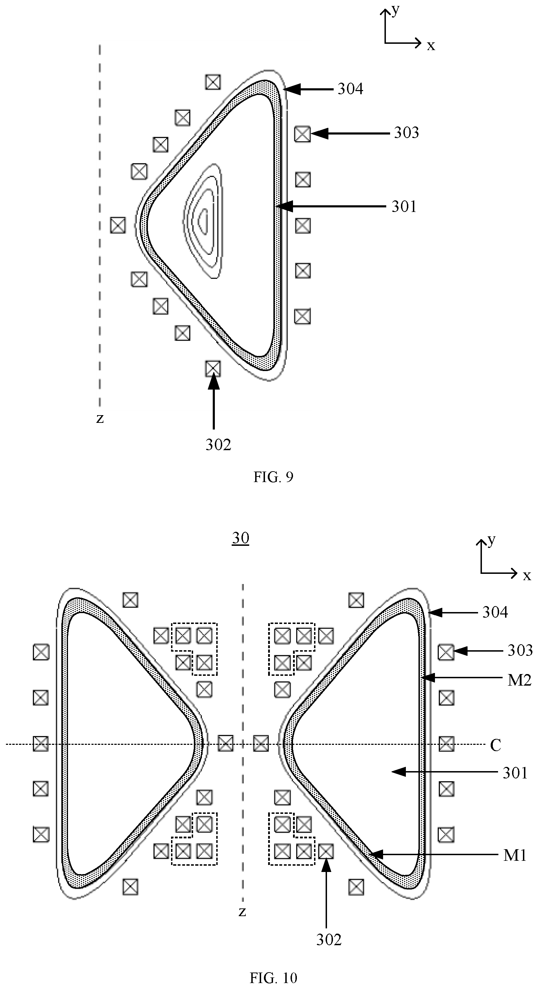

FIG. 5 is a schematic diagram of a state of a nuclear fusion reaction apparatus in a nuclear fusion reaction process according to an embodiment of the present disclosure. FIG. 6 is a schematic diagram of a state of nuclear fusion reaction apparatus in a nuclear fusion reaction process according to an embodiment of the present disclosure. FIG. 7 is a schematic diagram of a state of a nuclear fusion reaction apparatus in a nuclear fusion reaction process according to an embodiment of the present disclosure. FIG. 8 is a schematic diagram of a state of a nuclear fusion reaction apparatus in a nuclear fusion reaction process according to an embodiment of the present disclosure. FIG. 9 is a schematic diagram of a state of a nuclear fusion reaction apparatus in a nuclear fusion reaction process according to an embodiment of the present disclosure. The process of generating and deforming the plasma ring in the nuclear fusion reaction apparatus is illustrated below with reference to FIG. 5 to FIG 9, and only the sections of the structure (including the vacuum chamber 301, the first coil 302 and the second coil 303) on the right side of the central axis z of the nuclear fusion reaction apparatus are illustrated.

For example, a current may be transmitted to the third coils 304 in the nuclear fusion reaction apparatus 30 firstly, to that a toroidal magnetic field is generated in the vacuum chamber 301. As shown in FIG. 5, the current may be further transmitted to a first coil 302 and a second coil 303 (the coils framed in FIG. 5) located at one end of the vacuum chamber 301 in the axial direction and transmitted to a first coil 302 and a second coil 303 located at the other end of the vacuum chamber 301 in the axial direction, so that two magnetic null points at two ends space in the axial direction of the vacuum chamber 301 are produced. Next, two plasma rings may be generated at the two magnetic null points respectively, as shown in FIG. 6. The current may then be transmitted to the first coils 302 and the second coils 303 sequentially in the axial direction from the two ends to the middle, so that the two plasma rings are driven to move toward an equatorial plane of the vacuum chamber 301 (as shown in FIG. 7). The equatorial plane may be the same as the reference plane. Then, the current transmitted to the first coils 302 and the second coils 303 may be adjusted based on a parameter of the plasma rings, so that the two plasma rings are fused into one plasma ring with negative triangularity (as shown in FIG. 8). The current transmitted to the first coils 302 and the second coils 303 is continuously adjusted, so that the plasma ring is continuously driven closer to the central axis z of the vacuum chamber 301 (as shown in FIG. 9), resulting in a reduced major radius and a contracted volume of the plasma ring. During a fusion and contraction process of the plasma ring, a large amount of heat energy is released, and a fusion reaction of the plasma is caused as the plasma is heated to a fusion temperature.

Compared with traditional positive triangularity, the plasma ring with negative triangularity can effectively increase an area of magnetic field lines with good curvatures inside. Hence, a boundary turbulence of the plasma ring is significantly reduced, and a micro-instability (such as a trapped electron mode) on an ion-scale is suppressed. Correspondingly, an interaction between the plasma and the wall of the vacuum chamber is reduced, so that a risk of wall damage is effectively reduced. In addition, an electron temperature and a density perturbation may be relatively low in a core region of the plasma ring with negative triangularity, so that an energy confinement time is significantly improved. In a case of the plasma ring with negative triangularity, the nuclear fusion reaction apparatus, when discharges in a low-confinement mode (L-mode), can achieve a high normalized specific pressure and a confinement performance equivalent to that in a high-confinement mode (H-mode), without occurrence of a boundary localized mode. Hence, stability of fusion plasma can be improved. The plasma ring with negative triangularity can further achieve a higher normalized specific pressure value, which realizes a higher utilization of magnetic field energy and is more conducive to a net energy output.

In the conventional technology, two induction coils are provided at an upper position and a lower position inside the vacuum chamber, and a large induction voltage is transmitted to the induction coils, so that the two induction coils generate a plasma ring. Since the induction coils are in the vacuum chamber, the induction coils are apt to interact with the plasma and thereby be damaged due to the interaction.

In an embodiment of the present disclosure, the plasma ring is generated at the two magnetic null points in the vacuum chamber 301 through cooperation of the first coils 302 arranged outside the vacuum chamber and the second coils 303, and it is not necessary to provide an induction coil inside the vacuum chamber 301 for generating the plasma ring. In this way, the coil for generating the plasma ring is far away from the plasma, so that the damage due to the interaction with the plasma can be avoided. Additionally, in an embodiment of the present disclosure, as the plasma rings move toward the equatorial plane of the vacuum chamber 301 and are fused, a volume of the plasma ring is reduced to a certain extent, which is more conducive to release of heat energy. Therefore, the plasma can be heated to the fusion temperature more easily, and difficulty in triggering the fusion reaction is reduced.

For a traditional nuclear fusion reaction apparatus having a section in a positive D-shape, to enable the nuclear fusion reaction apparatus to generate the plasma ring with negative triangularity, it is necessary to transmit an extremely large current to a central solenoid to apply an enough force for the negative triangularity to the plasma. This causes a great current loss, and a generation efficiency of the plasma ring with negative triangularity is low. Moreover, since it is difficult to realize a stable control of the magnetic field generated from an excessively large current, there is a poor stability of controlling the plasma ring, and thereby the stability of the fusion plasma is poor.

In the nuclear fusion reaction apparatus 30 according to the embodiment of the present disclosure, the first coils 302 are close to the plasma ring with negative triangularity. Therefore, a low current inputted to the first coils 302 can realize a force required for the negative triangularity to the plasma ring. Hence, a current loss is reduced and a generation efficiency of the plasma ring with negative triangularity is improved. Since control of the low current is stable, an accuracy and stability of controlling the plasma ring with negative triangularity can be improved, and the stability of the fusion plasma is correspondingly improved. The nuclear fusion reaction apparatus 30 provided in the embodiment of the present disclosure is more suitable for future requirements of a fusion reactor.

In addition, the nuclear fusion reaction apparatus 30 provided in the embodiment of the present disclosure can suppress instability of the plasma in a vertical direction. In a traditional nuclear fusion reaction apparatus having a section in a positive D-shape, the plasma ring is elongated by attraction in the vertical direction. The central solenoids are arranged in a row in the vertical direction. In a case that the current of a coil on an upper side or lower side is slightly unstable, the plasma is driven to move to the upper side or lower side rapidly as a whole, and the plasma may hit the wall of the vacuum chamber, causing damage to the nuclear fusion reaction apparatus. In the embodiment of the present disclosure, the first coils are distributed along the inner torus of the vacuum chamber, and each first coil can apply an upward force to the plasma. Even if the force generated by one of the coils is unstable, the plasma is pushed by the force generated by the other coils and cannot slide down. Thereby, the stability of the fusion plasma is ensured.

In an embodiment, in addition to the first coils 302, a coil supporting structure may be installed in the space surrounded by the vacuum chamber 301, and the space can accommodate a power supply connector led out from the coil. Based on a structural design of the nuclear fusion reaction apparatus 30 in the embodiment of the present disclosure, a volume of the space surrounded by the vacuum chamber is be greatly expanded compared to the traditional nuclear fusion reaction apparatus. Hence, more coils with larger radius can be accommodated in the space, ensuring a greater magnetic flux generated by the coils. Moreover, more space is provided for installing the coil supporting structure and accommodating the power supply connector led out from the coil, so that the coil can be settled stabler, the power supply connector can be settled securer, and an application reliability of the coil is improved. Thereby, the restriction on the central column as in the traditional nuclear fusion reaction apparatus is alleviated.

The nuclear fusion reaction apparatus provided in the embodiment of the present disclosure may have a low aspect ratio. The aspect ratio of the vacuum chamber 301 of the nuclear fusion reaction apparatus 30 may be less than 3.

Herein above described is an example in which the vacuum chamber 301 of the nuclear fusion reaction apparatus 30 surrounds only the first coils 302, and the first coils 302 are arranged along the inner torus M1 of the vacuum chamber 301 in only one row. Other implementations of the coils in the nuclear fusion reaction apparatus 30 provided in the embodiment of the present disclosure are illustrated below with reference to the drawings.

In an embodiment, among the first coils 302 of the nuclear fusion reaction apparatus 30, at least one first coil 302 surrounds another first coil 302. For example, FIG. 10 is a schematic structural diagram of a nuclear fusion reaction apparatus according to an embodiment of the present disclosure. FIG. 10 shows a schematic diagram of a section of the nuclear fusion reaction apparatus. As shown in FIG. 10, the nuclear fusion reaction apparatus 30 may include more first coils 302 based on FIG. 4. In FIG. 10, three additional first coils 302 are provided on each side of the reference plane C based on FIG. 4, as an example, which are first coils 302 in the dashed box in FIG. 10. The original first coil 302 in FIG. 4 may surround the additional first coils 302. For top two first coils 302 among the additional first coils 302, one of the two first coils 302 surrounds the other one of the two first coils 302.

FIG. 10 is only an example, and the number of the additional first coils 302 based on FIG. 4 in practice may be 1, 2, 3, or any other number available for accommodation. FIG. 10 provides an example in which the number of the first coils 302 is consistent on both sides of the reference plane C and the first coils are in a symmetrical arrangement. In an embodiment, the first coils 302 on the two sides of the reference plane C may be in different quantities and an asymmetrical arrangement.

In an embodiment, among the first coils 302 of the nuclear fusion reaction apparatus 30, at least three first coils 302 located on a side of the reference plane C are arranged in a triangle. For example, reference is further made to FIG. 10, in which there are six first coils 302 on each side of the reference plane C arranged in a triangle. In an embodiment of the present disclosure, there may be at least three first coils 302 arranged in a triangle on each side of the reference plane C, or there may be at least three first coils 302 arranged in a triangle on only one side of the reference plane C.

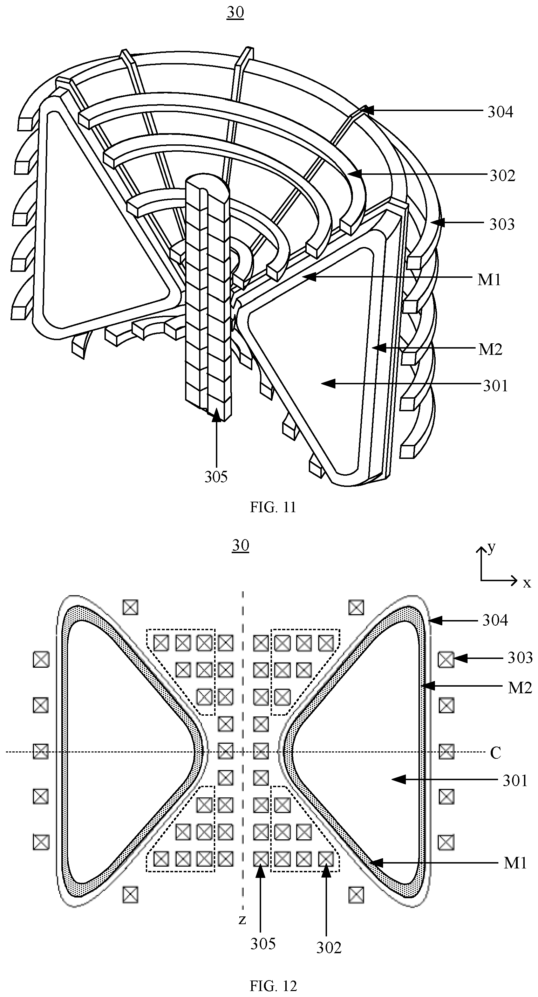

FIG. 11 is a schematic structural diagram of a nuclear fusion reaction apparatus according to an embodiment of the present disclosure. FIG. 12 is a schematic structural diagram of a nuclear fusion reaction apparatus according to an embodiment of the present disclosure. FIG. 12 may be a schematic diagram of a section of the nuclear fusion reaction apparatus. As shown in FIG. 11 and FIG. 12, the nuclear fusion reaction apparatus 30 may further include a plurality of fourth coils 305. The fourth coils 305 are surrounded by the vacuum chamber 301, and are sequentially arranged in the axial direction of the vacuum chamber 301. At least one of the fourth coil 305 is surrounded by the first coils 302 of the nuclear fusion reaction apparatus 30. As shown in FIG. 12, top three fourth coils 305 and bottom three fourth coils 305 among the fourth coils 305 may all be surrounded by the first coils 302. In an embodiment, an absolute value of a difference between diameters of any two of the fourth coils 305 may be less than a length threshold, for example, the fourth coils 305 are in a same size. The fourth coils 305 may function the same as the first coils 302.

In an embodiment of the present disclosure, the nuclear fusion reaction apparatus 30 provided in the embodiment of the present disclosure is obtained by making modifications based on a partial structure of the conventional nuclear fusion reaction apparatus. For example, the fourth coils 305 may be a central solenoid in a traditional nuclear fusion reaction apparatus having a section in a positive D-shape, and the fourth coils 305 together form a central column of the traditional nuclear fusion reaction apparatus. The first coils 302 may be added to the central column of the traditional nuclear fusion reaction apparatus, to obtain the coils surrounded by the vacuum chamber 301 in the nuclear fusion reaction apparatus 30 in the embodiment of the present disclosure. For example, the added first coils 302 include the first coils 302 arranged in a triangle as in a dashed box in FIG. 12.

In an embodiment, the first coils 302 may be added on the basis that some of the fourth coil 305 originally included in the central column is removed. The added first coils 302 may not be necessarily symmetrical with respect to the reference plane.

In an embodiment, more first coils 302 may be added based on FIG. 12, so that upper and lower ones of the first coils 302 which are not in the dashed box in FIG. 12 further surround other first coils 302.

In an embodiment of the present disclosure, central axis of coils in the nuclear fusion reaction apparatus 30 may overlap with each other, and may overlap with the central axis z of the vacuum chamber 301.

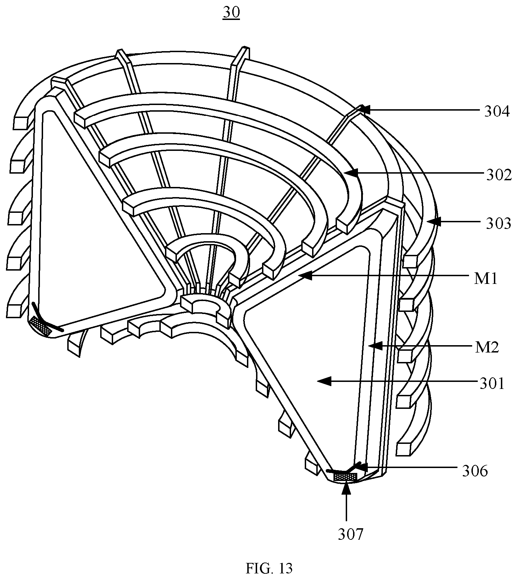

FIG. 13 is a schematic structural diagram of a nuclear fusion reaction apparatus according to an embodiment of the present disclosure. As shown in FIG. 13, based on any one of the above nuclear fusion reaction apparatuses (taking the nuclear fusion reaction apparatus shown in FIG. 3 as an example), the nuclear fusion reaction apparatus 30 further includes a divertor 306. The divertor is provided at a boundary between the inner torus M1 of the vacuum chamber 301 and the outer torus M2 of the vacuum chamber 302. The divertor 306 is configured to remove, from the plasma, the waste (e.g., helium ash) generated from fusion and impurities. FIG. 13 shows an example in which the divertor 306 is located at lower boundary in the vacuum chamber 301. In some implementations, a divertor may be further provided at an upper boundary between the inner torus M1 and the outer torus M2 of the vacuum chamber 301. In this case, the nuclear fusion reaction apparatus 30 includes two divertors. In some implementations, the nuclear fusion reaction apparatus 30 may include only the divertor at the upper portion in the vacuum chamber 301.

A weak field side of the nuclear fusion reaction apparatus 30 is a side far from the central axis z of the vacuum chamber 301, and a strong field side is a side close to the central axis z of the vacuum chamber 301. Compared with the traditional nuclear fusion reaction apparatus, in the nuclear fusion reaction apparatus 30 in the embodiment of the present disclosure, a magnetic null point is closer to the weak field side of the nuclear fusion reaction apparatus 30, a striking point of the plasma is closer to the weak field side, and accordingly, the major radius of the striking point may be significantly increased, and the divertor 306 may be closer to the weak field side. In this way, a radius of a target plate of the divertor 306 is large, and thereby a wet area (that is, an effective heat bearing area of the target plate) is relatively large, so that a heat load of the divertor 306 is reduced.

Reference is further made to FIG. 13. The nuclear fusion reaction apparatus 30 further includes a suction pump 307 connected to the divertor 306. A position of the suction pump 307 may be determined based on a position of the divertor 306. As shown in FIG. 13, the suction pump 307 is located at the bottom of the vacuum chamber 301. in a case where the divertor 306 is located at the top of the vacuum chamber 301, the suction pump 307 may be correspondingly located at the top of the vacuum chamber 301. The suction pump 307 is configured to exhaust the gas from the vacuum chamber 301 to maintain a high vacuum environment. The suction pump 307 may be a pump set composed of a plurality of pumps. For example, the suction pump 307 includes a molecular pump, a mechanical pump, and an ion pump, so that a sufficient pumping rate is provided.

The nuclear fusion reaction apparatus 30 may further include an inlet valve (not shown in the drawings). The inlet valve connects the inside and outside of the vacuum chamber 301, for controlling a rate and type of fusion fuel gas fed into the vacuum chamber 301. By adjusting the inlet valve, a composition and density of the plasma may be adjusted. The fusion fuel gas delivered through the inlet valve may be hydrogen or deuterium.

In summary, in the nuclear fusion reaction apparatus provided in the present disclosure, the inner torus of the outer wall of the vacuum chamber protrudes towards the central axis of the vacuum chamber, the first coils are sequentially arranged in the axial direction of the vacuum chamber and each extend in the circumferential direction of the inner torus A magnetic field is generated by the first coils and the second coils, so that a plasma ring with negative triangularity is generated in the vacuum chamber and a fusion reaction occurs. In this way, the first coils are close to the plasma ring with negative triangularity, and therefore a force required for negative triangularity may be applied to the plasma ring by merely inputting a low current to the first coils. Hence, a current loss is reduced, and a generation efficiency of the plasma ring with negative triangularity is improved. Since control of a low current is stable, an accuracy and stability of control of the plasma ring with negative triangularity is improved, and thereby a stability of fusion plasma is improved.

A nuclear fusion reaction system is further provided in an embodiment of the present disclosure. The nuclear fusion reaction system may include the nuclear fusion reaction apparatus 30, a magnet power supply, a plasma diagnosis unit, and a control unit.

The magnet power supply is configured to supply electrical power required by the magnet in the nuclear fusion reaction apparatus 30. The magnet power supply is connected to the coils in the nuclear fusion reaction apparatus 30 (such as the first coils 302, the second coils 303, the third coils 304, and the fourth coils 305), and is configured to transmit a current to the coils.

The plasma diagnosis unit is configured to detect a parameter of a plasma in the vacuum chamber 301 of the nuclear fusion reaction apparatus 30. The plasma diagnosis unit may include a microwave interferometer, a Langmuir probe, a magnetic probe, and various units for radiation diagnosis (such as hard X-ray, soft X-ray, AXUV). The obtained parameters may include a density, temperature, impurities, magnetic field information of the plasma, and the like.

The control unit is configured to adjust, based on the parameter, the current transmitted to the coils. The control unit may be referred to as a control and data acquisition system, which is configured to control a density, temperature, shape, and other parameters of the plasma in real time, and record various operation data of the nuclear fusion reaction apparatus 30. The control unit may adopt an advanced real-time feedback control algorithm to precisely control the parameter of the plasma.

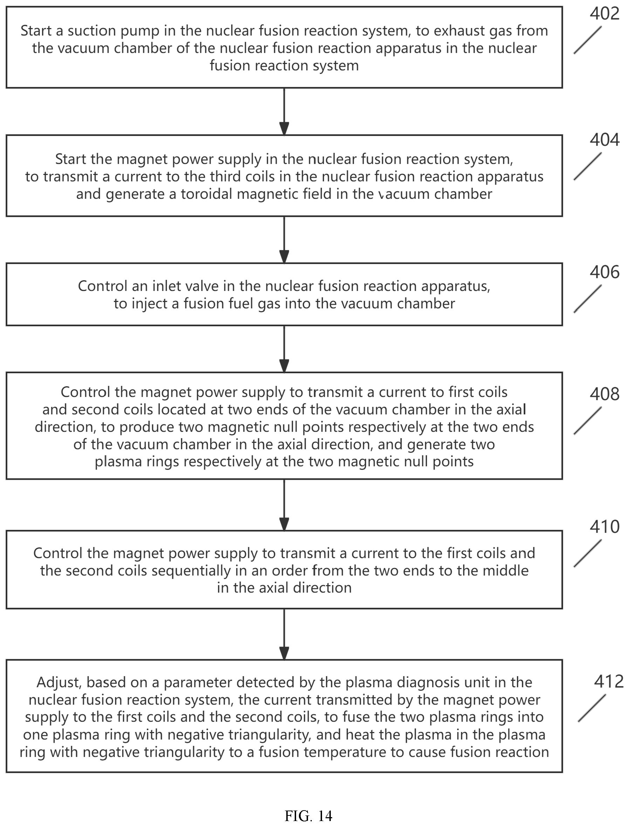

A method for nuclear fusion reaction is further provided in an embodiment of the present disclosure. The method is applicable to the nuclear fusion reaction system according to any one of the above embodiments. The method may be referenced to the related illustration with respect to FIG. 5 to FIG. 9. FIG. 14 is a flow chart of a method for nuclear fusion reaction according to an embodiment of the present disclosure. The method may be performed by the above-mentioned control unit. As shown in FIG. 14, the method includes the following steps 402 to 412.

In step 402, a suction pump in the nuclear fusion reaction system is started to exhaust gas from the vacuum chamber of the nuclear fusion reaction apparatus in the nuclear fusion reaction system.

Preparations may be made before step 402, to ensure a good condition of the nuclear fusion reaction apparatus 30 and other related devices, and perform necessary maintenance and repair. For example, detection may be made to determine whether the vacuum chamber, the magnet, the magnet power supply, the divertor, the suction pump, the inlet valve, the plasma diagnosis unit, the control unit, and the like, works normally.

Step 402 may be performed to create a vacuum environment and exhaust the gas from the vacuum chamber, to realize a high vacuum environment in the vacuum chamber as required.

In step 404, the magnet power supply in the nuclear fusion reaction system is started, to transmit a current to the third coils in the nuclear fusion reaction apparatus so that a toroidal magnetic field is generated in the vacuum chamber.

A magnetic field configuration may be performed in step 404, to activate a superconducting coil to generate a toroidal magnetic field at a magnetic axis of the nuclear fusion reaction apparatus.

In step 406, an inlet valve in the nuclear fusion reaction apparatus is controlled to inject a fusion fuel gas into the vacuum chamber.

Gas injection may be performed in step 406. For example, a millisecond pulse inlet valve may be turned on to inject a proper amount of high-purity fusion fuel gas into the vacuum chamber. The fusion fuel gas may include hydrogen or deuterium, for example.

In step 408, the magnet power supply is controlled to transmit a current to a first coil and a second coil located at one end of the vacuum chamber in the axial direction, and transmit the current to a first coil and a second coil that are located at the other end of the vacuum chamber in the axial direction in the nuclear fusion reaction apparatus, to produce two magnetic null points respectively at the two ends of the vacuum chamber in the axial direction, and generate two plasma rings respectively at the two magnetic null points.

For example, with reference to FIG. 5 and FIG 6, the first coils 302 and the second coils 303 at one end be charged, the first coils 302 and the second coils 303 at the other end also be charged, to produce a plasma ring at the magnetic null point at the top of the vacuum chamber 301 and a plasma ring at the magnetic null point at the bottom of the vacuum chamber 301.

In step 410, the magnet power supply is controlled to sequentially transmit a current to the first coils and the second coils in an order from the two ends to the middle in the axial direction.

Illustratively, with reference to FIG. 7 to FIG. 9, fusion and compression of the plasma rings may be performed in step 410. The magnet power supply may transmit the current to the multiple groups of first coils and second coils sequentially, so that the two plasma rings is driven to move towards the equatorial plane and merged into one plasma current ring. Each group of first coils includes two first coils that are symmetrical with respect to the reference plane, and each group of second coils includes two second coils that are symmetrical with respect to the reference plane. In this process, a large-scale magnetic reconnection occurs, magnetic energy is converted into internal energy of the plasma, the plasma is heated to the fusion temperature, and then the fusion reaction occurs. In some embodiments, in a case where the first coils and the second coils are not symmetrical with respect to the reference plane, each group of first coils may include at least two first coils located on both sides of the reference plane, and each group of second coils may include at least two second coils located on both sides of the reference plane.

In step 412, the current transmitted by the magnet power supply to the first coils and the second coils is adjusted based on the parameter detected by the plasma diagnosis unit in the nuclear fusion reaction system, so that the two plasma rings are fused into one plasma ring with negative triangularity, and the plasma in the plasma ring with negative triangularity is heated to a fusion temperature to cause the fusion reaction.

Step 412 is for monitoring and controlling the parameter of the plasma. In this step, the plasma diagnosis unit may monitor the density, temperature, impurities, and magnetic field information of the plasma in real time. The current of the groups of first coils and groups of second coils are adjusted based on a monitoring result in real time to accurately control the shape and position of the plasma.

In the method for nuclear fusion reaction provided in the embodiment of the present disclosure, the first coils disposed outside the vacuum chamber cooperates with the second coils 303 to generate the plasma ring at the two magnetic null points in the vacuum chamber. It is not necessary to provide an induction coil inside the vacuum chamber for generating the plasma ring. In this way, the coils for generating the plasma ring are far away from the plasma, and therefore damage due to interaction with the plasma can be avoided. In the embodiment of the present disclosure, in a process that the plasma ring moves toward the equatorial plane of the vacuum chamber and is fused, as shown in FIG. 9, the major radius of the plasma ring is reduced, and a volume of the plasma ring is reduced. which is more conducive to release of heat energy. Hence, the plasma can be heated to the fusion temperature easily, and the difficulty in triggering the fusion reaction is reduced.

The above describes specific embodiments of the present disclosure. Other embodiments are within the scope of the appended claims. In some cases, the acts or steps recited in the claims may be performed in a different order than those in the embodiments and still achieve expected results. In addition, the processes depicted in the drawings do not necessarily require a particular order as shown or the sequential order to achieve expected results. Multitasking and parallel processing are also possible or may be advantageous in some embodiments.

Those skilled in the art should understand that the embodiments described in the specification all belong to preferred embodiments, and the acts and modules involved are not necessarily required for the present disclosure. In the above embodiments, the description of each embodiment has its own emphasis. For a part not described in detail in a certain embodiment, reference may be made to the relevant description of other embodiments.

The preferred embodiments of the present disclosure disclosed above are only intended to assist in elucidating the present disclosure. The alternative embodiments do not provide a detailed description of all the details, nor does them limit the scope of the present disclosure to the specific embodiments described. Apparently, many modifications and variations can be made based on the teachings of the present disclosure. These embodiments are chosen and described in detail to better explain principles of the present disclosure and practical applications, so that those skilled in the art can better understand and use the present disclosure.

## Claims

1. A nuclear fusion reaction apparatus, comprising a toroidal vacuum chamber, a plurality of first coils, a plurality of second coils, and a plurality of third coils, wherein
an outer wall of the vacuum chamber comprises an inner torus and an outer torus that are connected to each other, the outer torus surrounds the inner torus, and the inner torus protrudes towards a central axis of the vacuum chamber;
a plurality of first coils, wherein the plurality of first coils are surrounded by the vacuum chamber, and at least some first coils among the plurality of first coils are sequentially arranged in an axial direction of the vacuum chamber and each extend in a circumferential direction of the inner torus surface;
a plurality of second coils, wherein the plurality of second coils surround the vacuum chamber, and the plurality of second coils are sequentially arranged in the axial direction of the vacuum chamber and each extend in a circumferential direction of the outer torus surface; and
the third coils surround the vacuum chamber, and are sequentially arranged in a circumferential direction of the vacuum chamber; and
the first coils, the second coils and the third coils are for generating a magnetic field, to generate a plasma ring with negative triangularity in the vacuum chamber and cause fusion reaction.

2. The nuclear fusion reaction apparatus according to claim 1, wherein an axial space of the vacuum chamber increases in a direction from the central axis of the vacuum chamber to an outer edge of the vacuum chamber.

3. The nuclear fusion reaction apparatus according to claim 2, wherein the vacuum chamber has a section in a reversed D-shape or triangle, wherein the section is a plane where the central axis of the vacuum chamber is located.

4. The nuclear fusion reaction apparatus according to claim 3, wherein the third coils are in a reversed D-shape or triangle.

5. The nuclear fusion reaction apparatus according to any one of claims 1 to 4, wherein at least one first coil among the first coils surrounds another first coil among the first coils.

6. The nuclear fusion reaction apparatus according to claim 5, wherein at least three of the first coils are located on a side of a reference plane in a triangle arrangement, wherein the reference plane is perpendicular to the axial direction of the vacuum chamber.

7. The nuclear fusion reaction apparatus according to any one of claims 1 to 4, further comprising a plurality of fourth coils, wherein
the fourth coils are surrounded by the vacuum chamber, and are sequentially arranged in the axial direction of the vacuum chamber, and
at least one of the fourth coils is surrounded by the first coils.

8. The nuclear fusion reaction apparatus according to any one of claims 1 to 4, wherein an aspect ratio of the vacuum chamber is less than 3.

9. The nuclear fusion reaction apparatus according to any one of claims 1 to 4, further comprising a divertor at a boundary between the inner torus of the vacuum chamber and the outer torus of the vacuum chamber.

10. The nuclear fusion reaction apparatus according to claim 9, further comprising a suction pump connected to the divertor.

11. A nuclear fusion reaction system, comprising:
the nuclear fusion reaction apparatus according to any one of claims 1 to 10;
a magnet power supply, connected with the coils in the nuclear fusion reaction apparatus and configured to transmit a current to the coils;
a plasma diagnosis unit, configured to detect a parameter of a plasma in the vacuum chamber of the nuclear fusion reaction apparatus; and
a control unit, configured to adjust, based on the parameter, the current transmitted to the coils.

12. A nuclear fusion reaction method, applied to the nuclear fusion reaction system according to claim 11, wherein the method comprises:
starting a suction pump in the nuclear fusion reaction system, to exhaust gas from the vacuum chamber of the nuclear fusion reaction apparatus in the nuclear fusion reaction system;
starting the magnet power supply in the nuclear fusion reaction system, to transmit a current to the third coils in the nuclear fusion reaction apparatus and generate a toroidal magnetic field in the vacuum chamber;
controlling an inlet valve in the nuclear fusion reaction apparatus, to inject a fusion fuel gas into the vacuum chamber;
controlling the magnet power supply to transmit a current to a first coil and a second coil that are located at one end of the vacuum chamber in the axial direction and transmit the current to a first coil and a second coil that are located at the other end of the vacuum chamber in the axial direction in the nuclear fusion reaction apparatus, to form two magnetic null points respectively at the two ends of the vacuum chamber in the axial direction, and generate two plasma rings respectively at the two magnetic null points;
controlling the magnet power supply to transmit a current to the first coils and the second coils sequentially in an order from the two ends to the middle in the axial direction; and
adjusting, based on a parameter detected by the plasma diagnosis unit in the nuclear fusion reaction system, the current transmitted by the magnet power supply to the first coils and the second coils, to fuse the two plasma rings into one plasma ring with negative triangularity, and heat the plasma in the plasma ring with negative triangularity to a fusion temperature to cause fusion reaction.
